Europäisches Patentamt

European Patent Office

Office européen des brevets

(19)

(11) Publication number: **0 113 165**
**A1**

(12)

# EUROPEAN PATENT APPLICATION

(21) Application number: 83305862.1

(22) Date of filing: 28.09.83

(51) Int. Cl.³: **A 23 J 1/14**
**C 11 B 1/10, C 11 B 1/02**

(30) Priority: 28.09.82 GB 8227661

(43) Date of publication of application:
11.07.84 Bulletin 84/28

(84) Designated Contracting States:
BE CH DE FR GB IT LI NL SE

(71) Applicant: IMPERIAL BIOTECHNOLOGY LIMITED
8 Princes Gardens
London SW7 1NA(GB)

(72) Inventor: Fullbrook, Paul Donald
38 Northcott
Bracknell, Berks, RG12 4WR(GB)

(74) Representative: Brock, Peter William et al,
Michael Burnside & Partners 2 Serjeants' Inn Fleet Street
London EC4Y 1HL(GB)

(54) Extraction of vegetable oils and proteins from seeds.

(57) Vegetable oils and protein of high quality can be extracted from oil seeds by contacting the seeds with water in the presence of at least one added enzyme, and separating the resulting reaction mixture into a solid protein-containing fraction, an oil-fraction and an aqueous fraction. Advantageously a solvent is present during the extraction, or can be added to assist the separation stage.

EP 0 113 165 A1

0113165

EXTRACTION OF VEGETABLE OILS

This invention relates to the extraction of oils from seeds.  More particularly, this invention relates to the extraction of oils and proteins from oil seeds by an enzymic process.

Oil seeds, e.g. soybeans, peanuts, cotton seeds, sunflower and rape seeds constitute the major source of edible oils.  As much as 70% of world production of fats or oils is provided from vegetable sources, more than 20% coming from soybeans.  In addition to providing oils, these seeds constitute also an increasingly important source of protein.

Two main types of process are commonly employed for the commercial extraction of oils from oil seeds. These are (a) mechanical expression, and (b) solvent extraction.  Both types of process tend to denature the proteins occurring in the oil seeds, thereby lowering the solubility of the protein extracted, and restricting its utility in food products.  There has been a search for improved extraction processes, but this search has been concentrated on aqueous extraction processes, involving centrifugal separation of oil and protein phases.

In spite of the expanding interest in recent years in the applications of biotechnology, there appears to have been no disclosure of such a process applied to the extraction of vegetable oils.  Indeed, those enzymes occurring naturally in the oil seeds are usually inactivated before the extraction processes generally employed in industry.  The purpose of this inactivation step is to avoid decomposition processes leading to rancid and sometimes toxic products.

Some proposals have been made for the use of enzymic processes in the extraction of natural products, but these have not included processes for extracting oil from oil seeds.

GB-A 361461 proposed the separation of fats from vegetable material containing proteins, fats and starches, and more especially the separation of cacao butter, by using proteolytic enzymes to peptize the proteins.

GB-A 1157415 relates to a process for preparing a protein concentrate from fish comprising digesting fish by enzymic proteolysis, and dissolving resulting fats and oils in an organic solvent to leave a substantially fat-free protein concentrate.

GB-A 1402769 relates to the recovery of oil from grain germs by treatment, at a pH of 3 to 6 and a temperature from 25 to 60°C, with a cellulase preparation which is substantially free from lipase and lipoxidase activity.

The object of this invention is to provide a new and improved process for the separation of vegetable oils from oil seeds. Further objects of the invention will appear hereinafter.

The present invention provides a process for the extraction of vegetable oils and protein from oil seeds which comprises contacting oil seeds with water in the presence of at least one added enzyme, and separating the resulting reaction mixture into a solid protein-containing fraction, an oil-fraction and an aqueous fraction.

It has now been found that by carrying out a water extraction of oil seeds, usually at an elevated temperature, in the presence of one or more of a variety of enzymes, it is possible to obtain good yields of the desired vegetable oil, and in addition to obtain a protein fraction which has undergone less denaturing than occurs in the processes conventionally used in industry. Moreover, the oil obtained is of high quality, and does not generally require the elaborate purification commonly necessary to remove the degradation products obtained in conventional extraction processes.

The process of the invention even makes it possible to produce oil from sources not normally considered as oil sources, e.g. melon seeds.

A variety of enzymes can be employed in the process of the invention. Indeed it is generally desirable to employ enzyme mixtures (from the same or different sources) so that different enzymes may each perform their different functions leading to a more rapid and effective breakdown of the cellular structures in the oil· seeds, and more effective release of the oils.

Among the types of enzyme that may be employed are ∝-amylase, β-glucanase, neutral-proteinase, alkaline proteinase, acidic proteinase, pectolytic enzymes, cellulase, and hemicellulase. Specific enzymes that have been effectively employed in the process of the invention are commercially available mixtures, e.g. a mixture of ∝-amylase, β-glucanase and n-proteinase from B. subtilis; a mixture of pectolytic enzymes and cellulases from A. niger; and hemicellulase from A. niger.

The enzymic extraction is generally carried out at ambient or at an elevated temperature, for instance 15 to 90°C, more preferably 45 to 70°C, the actual temperature being one at which the enzymes function well without being deactivated. The pH can also be adjusted during the course of the reaction to a value suitable for the particular enzyme being used. Values in the range from 3 to 8 are generally suitable.

Separation of the oil fraction from the reaction product is assisted by the use of a solvent. This can be any water-immiscible solvent whose volatility enables its easy recovery, e.g. hexane. This solvent can be present, if desired during the enzymic extraction, or can be added after or preferably before filtration. Such solvents are generally those used in known processes for extraction of oils from seeds. They are, however, generally employed in lower quantities in this invention, because they fulfil a different function, so that there is less expenditure of energy on solvent recovery.

In accordance with one embodiment of the invention, the extraction process is carried out by size-reducing the oil seeds to a desired particle size. The resulting particles are contacted with water, suitably with stirring or other agitation, at a temperature of from 15 to 90°C, e.g. from 45 to 70°C, for a suitable period e.g. of 1 to 6 hours. The enzyme or enzymes are present during this extraction step, e.g. in amounts up to 5% by weight, based on oil seeds. In general, increasing the amount of enzyme increases the speed at which the oil is separated, but optimum amounts can be readily established.

Once the extraction has proceeded for a desired period, the water-immiscible solvent, e.g. hexane, can be added, and the resulting mixture is filtered. The solids, thus-separated comprise a protein-containing fraction, and the further treatment of this fraction will be further described below. The filtrate comprises water, oil and solvent. Its pH can if desired be suitably adjusted, e.g. to 3.5 with an acid, such as citric acid, and it is then centrifuged to give an insoluble fraction, an aqueous fraction and an oil/solvent fraction, the latter two fractions being separated by decantation. The desired vegetable oil is isolated by evaporating, and desirably recycling the solvent.

The insolubles from the centrifuging step can be combined with the solids from the filtration step, and purified by extraction with a solvent. The residue after removal of solvent constitutes a highly advantageous protein concentrate.

In an alternative and preferred embodiment, the solvent is added before or during the extraction step. The later steps of the process are otherwise the same as those of the process described above. This embodiment provides higher yields of oil.

The following Examples set out results obtained when working on a laboratory scale. In these Examples, the following enzymes were employed:

Enzyme - C : a mixture of $\alpha$-amylase, $\beta$-glucanase and n-proteinase from B. subtilis (Ceremix-Novo Industri A/S)

Enzyme - P : a mixture of pectolytic enzymes and cellulases from A. niger (Pectinex-Swiss Ferment Company)

Enzyme - G : hemicellulase from A. niger (Gamanase-Novo Industri A/S)

A1          A. niger - fungal $\beta$-glucanase

A2          A. niger - fungal hemicellulase

A3          A. niger - fungal pectolytic enzyme complex

T           Trichoderma viridii - fungal cellulase

## EXAMPLE 1

Rapeseed was mechanically ground using a coffee mill.

25g of ground meal was suspended in 100 ml of distilled water in a conical flask.

0.25 ml of enzyme C was added, and the pH was adjusted to 6.0 with M/1 NaOH. The flask and contents were incubated in a waterbath and stirred electrically, the pH being maintained at 6.0.

The following temperature programme was used:-

60 minutes at 50°C

Temperature allowed to rise to 63°C by adjusting thermostat.

120 minutes at 63°C

Temperature allowed to rise to 80°C

13 minutes at 80°C

On completion of this sequence, the flask and contents were cooled to room temperature.

The contents of the flask were coarse-filtered through a cheese cloth (to remove solid debris) then washed with excess hexane. The pH of the filtrate was lowered to 3.5 (with M/1 citric acid) and it was centrifuged to give 3 fractions:

1. Oil/solvent layer
2. Aqueous layer
3. Insoluble residues

The top layer was decanted and the aqueous layer was separated from insolubles by filtration through paper.

Insolubles were pooled, dried, ether extracted (to remove any residual oil) and dried.

The yield of oil was calculated by determining the amount of residual oil (by weight, $x$) after evaporating the solvent from fraction 1 and expressing this value as a fraction of the total weight of raw material taken.

i.e. yield = $\frac{x}{25} \cdot 100\%$

The amount of oil extracted (average of 5 separate experimental runs) was found to be 9.3%.

The amount of extractable oil in rapeseed and soybeans was estimated by Soxhlet extraction of samples of the ground materials with hexane, followed by evaporation of the solvent from the extracted material. The yields of oils were as follows:-

Rapeseed:  30.5%

Soybean :  19.8%

(These values therefore represent ideal control values - the upper limits sought in the subsequent experiments).

## EXAMPLE 2

The same experiment procedure was used as in Example 1, except that double the amount of enzyme C was used (i.e. 2% $^v$/w basis on seed). The amount of oil extracted (average of 5 separate experimental runs) was 12.8%.

## EXAMPLE 3

The same experimental procedure was used as in Example 1, except that three times the amount of enzyme was used (i.e. 3% $^v$/w basis on seed). The amount of oil extracted (average of 5 separate experimental runs) was 13.3%.

## EXAMPLE 4

The same experimental procedure was used as in Examples 1-3, except that ground soybean was used as source material instead of rapeseed.

The amount of oil extracted (each the average of 5 separate experimental runs) was as follows:-

| Enzyme concn, % $^V$/w basis on bean | 1 | 2 | 3 |
|---|---|---|---|
| Oil Yield % (calc. as in Ex1) | 7.1 | 8.8 | 9.2 |

## EXAMPLE 5

The same experimental procedure was used as in Example 1, with the modification that in addition to 100 ml of distilled water and enzyme solution, 50 ml of hexane was also added to the milled rapeseed to extract the liberated oil. Hence liberation of oil from seed is effected by simultaneous enzymatic hydrolysis and product removal by solvent extraction. A condenser was employed in order to prevent loss of solvent during the temperature stepped hydrolysis.

The amount of oil extracted (average of 5 separate experimental runs) was 16.7%.

## EXAMPLE 6

The same experimental procedure was used as in Example 5 but 2 and 3 times the amount of enzyme C was used (i.e. 2% and 3% $^V$/w basis on seed). The amount of oil extracted (average of 5 experimental runs) was:-

| Enzyme concn, % $^V$/w basis on seed | 2 | 3 |
|---|---|---|
| Oil Yield % (Calc as in Ex1) | 19.8 | 20.0 |

## EXAMPLE 7

The same experimental procedure was used as in Example 5 and 6, except that ground soybean was used as source material instead of rapeseed. The amount of oil extracted (average of 5 separate experimental runs) was as follows:-

| Enzyme concn, % $^V$/w basis on bean | 1 | 2 | 3 |
|---|---|---|---|
| Oil yield, % $^V$/w | 10.6 | 12.4 | 12.6 |

## EXAMPLE 8

The same experimental procedure was used as in Example 5, 6 and 7 (i.e. both rapeseed and soybeans) except that enzyme P was used in place of enzyme C, and a pH of between 4.5 and 5.0 was maintained, instead of a value of 6.0. The amount of oils extracted (each an average of 5 separate experimental runs for both types of materials and for the various enzyme levels) were as follows:-

| Enzyme Conc, % $^V$/w basis | | 1 | 2 | 3 |
|---|---|---|---|---|
| Oil Yield, % $^W$/w | rapeseed | 18.5 | 21.4 | 21.5 |
| | soybean | 14.2 | 16.4 | 16.6 |

## EXAMPLE 9

The same experimental procedure was used as in Example 8, except that enzyme G was used. The amounts of oils extracted (averaged as in Example 8) were as follows:-

| Enzyme concn, % $^V$/w basis | | 1 | 2 | 3 |
|---|---|---|---|---|
| Oil Yield % $^W$/w | rapeseed | 19.1 | 22.0 | 22.1 |
| | soybean | 15.2 | 17.5 | 17.8 |

## EXAMPLE 10 (CONTROL)

The same experimental procedure was used as in Example 5, except that (as a control) no enzymes were used. The amount of oils extracted (each an average of 3 separate experimental runs) were as follows:-

| | Rapeseed | Soybean |
|---|---|---|
| Oil Yield, %$^w$/w | 3.8 | 2.7 |

### EXAMPLE 11 (PROTEIN CONTENT)

The crude protein content of the residual insolubles obtained after oil extractions was estimated by the standard Kjeldahl method (NX6.25). The results were as follows (average of 3 separate experiments):-

| | % crude protein in protein concentrate |
|---|---|
| Rapeseed | 27.1 |
| Soybean | 33.6 |

### EXAMPLE 12 (OIL QUALITY)

An analysis of the quality of the rapeseed oils obtained was made by the standard method as described in Pearson (The Chemical Analysis of Foods. 7th Edn. 1976, pub: by Churchill-Livingstone, Edinburgh) and the results compared with ideal figures as recommended by codex standards:-

| Paramater | Unit | Results | Codex Standard |
|---|---|---|---|
| Iodine value | — | 98 | 94 - 120 |
| Saponification value | mgKoH/g | 174 | 168 - 181 |
| Unsaponificable matter | g/Kg | 17.8 | max 20 |
| Peroxide value | meq/Kg | 9.62 | max 10 |
| Refractive index | (at 4°C) | 1.467 | 1.465-1.469 |
| Acid value | mgKoH/g | 0.38 | max - 0.6 |

### EXAMPLE 13 (for Comparison, Preparation of Protein Concentrate)

Dried melon seeds were ground in a similar manner as in Example 1.

The resultant flour was weighed and homogenised to produce a slurry. This was treated with acid

- 10 -

0113165

to lower the pH to 3.5 and diluted with water to give a 1:3.5-4 ratio of seed flour to liquid.

This was then centrifuged, with the result that the extract separated into 3 layers: solids at the bottom, an aqueous layer in the middle and an oily layer floating on the surface.

The liquid layers were decanted and the sludge was recentrifuged to give a solid and an oily liquid layer floating on top.

Liquid layers were recentrifuged to sediment suspended solids.

Solids were then combined, dried and extracted with diethyl ether and dried to give a protein concentrate fraction. Oil was collected by decantation and evaporation of solvent, and estimated by weight.

The following results were obtained:-

|  | g | % approx: |
|---|---|---|
| Mass of melon seed flour | 352 | |
| Mass of water used to extract flour | 1256 | |
| Net mass of oil floating | 104 | 30 |
| Mass of protein*concentrate (wet) | 250 | |
| Mass of protein concentrate (dry) | 170 | |
| Mass of protein concentrate after $Et_2O$ Extn | 136 | 40 |
| Oil removed after aqueous processing | | 6.5 |
| Oil removed after $Et_2O$ Extn | | 30 |
| Oil and Solubles | | 60 |

* Protein was estimated as Nx5.7 - nitrogen determined by macro-kjeldahl method.


EXAMPLE 14


12g of protein concentrate prepared as in Example 13 was suspended in 20 ml of water in a flask. The pH was adjusted to 8.0 with NaOH and the suspension was heated to 50°C in a water bath.

16.8m Anson units of alkaline proteinase (produced as a culture filtrate by fermentation of Bacillus licheniformis) was added to the flask, and the whole was diluted to constant weight with water.

The mixture was incubated at 50°C for 4 hours, whilst the pH was maintained at 8.0 by addition of M NaoH from a burette.

The flask was then reweighed (to allow for evaporation corrections) and the pH was lowered to 4.5 with citric acid.

The temperature was raised to 80°C for 5 minutes to inactivate the enzyme.

The contents of the flask was then analysed and gave the following results:-

|                         | %   |
|-------------------------|-----|
| Solubilised protein     | 35  |
| Protein hydrolysate     | 2.8 |
| "Extra" oil released    | 16  |

## EXAMPLE 15

A series of experiments similar to that outlined in Example 14 were run.

The substrate used was 8% $^w$/v protein isolate and incubations were again carried out at 50°C but with pH maintained at 4.5. The following enzymes were used in addition to the alkaline proteinase:-

| | |
|--|--|
| A1 | Aspergillus niger-fungal $\beta$-glucanase |
| T | Trichoderma viridii-fungal cellulase |
| A2 | Aspergillus niger-fungal hemicellulase |
| A3 | Aspergillus niger-fungal pectolytic enzyme complex |

The following results were obtained:-

| Enzyme Type Used | Solubilised Protein % | Hydrolysed Protein % | "Extra" Oil Recovered % |
|---|---|---|---|
| A1 | 38 | 3.0 | 14 |
| T | 43 | 3.4 | 14 |
| A2 | 47 | 3.5 | 19 |
| A3 | 48 | 3.8 | 23 |

EXAMPLE 16

An experiment similar to Example 14 was run, using whole flour instead of protein extract, and a mixture of $\alpha$-amylase, $\beta$-glucanase and n-proteinase enzymes produced from Bacillus subtilis was used to supplement the a - proteinase from B. licheniformis. The results obtained were as follows:-

|  | % |
|---|---|
| Solubilised protein | 25 |
| Hydrolysed protein | 4.2 |
| Oil released | 18 |

Examples 13 to 16 illustrate that oil can be released from alternative oil seeds by enzymatic hydrolysis of seedmeal or the residual oil bound to a protein isolate produced from the seedmeal in which indigenous oil had been removed by aqueous floatation or solvent extraction.

CLAIMS:

1.    A process for the extraction of vegetable oils and protein from oil- and protein-containing oil seeds characterized in that size-reduced oil seeds are contacted with water and with an effective quantity of at least one added enzyme, at a temperature and for a period of time sufficient for said enzyme to break down said oil seeds and to release at least a portion of said oil and protein, and in that a solid protein-containing fraction, an oil-fraction and an aqueous fraction are separated from the resulting reaction mixture.

2.    A process according to Claim 1 characterized in that the oil seeds are contacted with water and the added enzyme at an elevated temperature.

3.    A process according to Claim 2 characterized in that said elevated temperature is from about 15 to 90°C.

4.    A process according to any preceding Claim characterized in that said oil seeds are soybeans, peanuts, cotton seeds, sunflower seeds, rape seeds or melon seeds.

5.    A process according to any preceding Claim characterized in that the enzyme is at least one enzyme selected from $\alpha$-amylases, $\beta$-glucanases, neutral-proteinases, alkaline proteinases, acidic proteinases, pectolytic enzymes, cellulases and hemicellulases.

6.    A process according to any of Claims 1 to 5 characterized in that the reaction product is filtered to separate the protein-containing fraction, a water-immiscible solvent is added, and the solvent and vegetable oil are separated from the aqueous fraction.

7. A process according to any of Claims 1 to 5 characterized in that the oil seeds are contacted with water in the presence of the enzyme and of a water-immiscible solvent, and the reaction product is filtered to separate the protein-containing fraction, and the resulting filtrate is separated into a solvent-oil fraction and an aqueous fraction.

0113165

# European Patent Office

**EUROPEAN SEARCH REPORT**

Application number

EP 83 30 5862

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | FR-A-2 310 706 (INSTITUT NATIONAL DE LA RECHERCHE AGRONOMIQUE) * Claims 1,5-7 * | 1-6 | A 23 J 1/14 C 11 B 1/10 C 11 B 1/02 |
| X,Y | FR-A-1 598 025 (ROHM AND HAAS) * Abstract A, nrs. 1,2,5-7,9; example 3 * | 1-6 | |
| Y,D | GB-A-1 402 769 (CPC) * Claims 1,2,9; page 3, column 1 * | 1-3,5 | |
| Y | FR-A-2 417 263 (INSTITUT NATIONAL DE LA RECHERCHE AGRONOMIQUE) * Claims 1,3,6,8; figure 1; page 3, lines 35-40 * | 4,6 | |

**TECHNICAL FIELDS SEARCHED (Int. Cl. 3)**

A 23 J
C 11 B

The present search report has been drawn up for all claims

| Place of search | Date of completion of the search | Examiner |
|---|---|---|
| THE HAGUE | 03-02-1984 | PEETERS J.C. |